Europäisches Patentamt

**European Patent Office**

**Office européen des brevets**

(19)

(11) Numéro de publication: **0 271 515**
**B1**

(12) **FASCICULE DE BREVET EUROPEEN**

(45) Date de publication du fascicule du brevet: **16.01.91**

(51) Int. Cl.⁵: **B 65 H 23/038, B 65 H 45/09**

(21) Numéro de dépôt: **87903338.9**

(22) Date de dépôt: **20.05.87**

(86) Numéro de dépôt international:
**PCT/FR87/00172**

(87) Numéro de publication internationale:
**WO 87/07244 03.12.87 Gazette 87/27**

(54) **DISPOSITIF DE GUIDAGE D'UN FILM SOUPLE REPLIE SUR LUI-MEME.**

(30) Priorité: **21.05.86 FR 8607208**

(43) Date de publication de la demande:
**22.06.88 Bulletin 88/25**

(45) Mention de la délivrance du brevet:
**16.01.91 Bulletin 91/03**

(84) Etats contractants désignés:
**AT BE CH DE GB IT LI LU NL SE**

(56) Documents cités:
**DE-A-1 774 177       US-A-3 147 898**
**DE-A-1 944 633       US-A-3 754 064**
**DE-C-0 517 892       US-A-4 007 865**
**FR-A-0 680 497**

**Patent Abstracts of Japan, vol. 9, no. 172
(M-397)(1985), 17 Juillet 1985 & JP, A, 6044452
(Mitsubishi Jukogyo K.K.) 9 Mars 1985**

**IBM Technical Disclosure Bulletin, vol. 22, no. 6,
Novembre 1979 (New York, US) J.S. Heath:
"Paper feed mechanism", pages 2496-2497**

(73) Titulaire: **BAXTER INTERNATIONAL INC. (a
Delaware corporation)
One Baxter Parkway
Deerfield Illinois 60015 (US)**

(72) Inventeur: **SUSINI, Etienne
8, chemin de la Vallée
F-94440 Villecresnes (FR)**
Inventeur: **SOUBRIER, Pierre
62, boulevard Louis Schmidt
B-1040 Bruxelles (BE)**

(74) Mandataire: **Fruchard, Guy et al
CABINET BOETTCHER 23, rue la Boétie
F-75008 Paris (FR)**

Courier Press, Leamington Spa, England.

## Description

La présente invention concerne un dispositif de guidage d'un film souple replié sur lui-même, en particulier, bien que non exclusivement, pour la réalisation de poches contenant un liquide de perfusion.

On connaît déjà des machines pour la réalisation de poches à partir d'un film souple en matière plastique. En particulier, on connaît des machines pour la réalisation de poches à partir d'un film thermoplastique. Ces machines comprennent une série de postes où le film est traité de façon successive. En général, le film est déroulé à partir d'un bobinoir, puis perforé. Au droit des perforations, des embouts sont soudés par une tête de soudage puis le film est conformé dans un conformateur destiné à replier le film sur lui-même en vue d'effectuer une soudure bord à bord. Une fois soudé bord à bord, le film forme un tube qui est ensuite soudé transversalement, à intervalles réguliers, afin de former des poches individuelles, ces poches individuelles étant remplies préalablement à la réalisation de la seconde soudure transversale délimitant la poche.

La présente invention concerne plus particulièrement l'étape immédiatement antérieure à la réalisation de la soudure bord à bord. En effet, lorsque le film est replié sur lui-même en passant dans le conformateur, il arrive que les deux bords ne soient pas exactement juxtaposés et, si le décalage entre les bords est trop important, les bords ne sont pas associés entre eux lors de leur passage dans le dispositif de soudage.

Un but de la présente invention est de proposer un dispositif de guidage permettant de mettre exactement les bords en coïncidence juste avant l'opération de soudage.

En vue de la réalisation de ce but, on prévoit, selon l'invention, un dispositif de guidage d'un film souple replié sur lui-même et entraîné en déplacement selon une direction longitudinale du film, comprenant une plaque d'appui lisse fixée à un châssis, montée parallèlement au film et disposée pour s'engager entre deux plis du film, et des moyens de pression portés par le châssis de part et d'autre de la plaque d'appui pour maintenir les plis du film contre la plaque d'appui, les moyens de pression étant montés pour être réglés selon différentes orientations par rapport à la direction de déplacement du film.

Ainsi, lors du déplacement longitudinal du film, les moyens de pression induisent une composante de déplacement transversal d'autant plus importante que les moyens de pression sont plus inclinés par rapport à la direction de déplacement du film et, par un réglage de l'orientation des moyens de pression, on obtient la composante de déplacement latéral requise pour qu'à la sortie du dispositif de guidage les bords du film soient exactement juxtaposés.

Selon une version avantageuse de l'invention, le dispositif de guidage comporte des moyens de blocage de l'orientation des moyens de pression. Ainsi, pour un film donné ayant des caractéristiques de glissement constantes, le réglage initial du dispositif de guidage est maintenu par le blocage de l'orientation des moyens de pression dans la position permettant d'obtenir une juxtaposition des deux bords du film.

Selon un mode de réalisation préféré de l'invention, les moyens de pression comportent une roulette montée sur un axe de rotation parallèle à la plaque d'appui. Ainsi, les moyens de pression exercent un frottement faible sur le film et ne risquent pas d'endommager celui-ci.

Selon un autre aspect avantageux de l'invention, la roulette est montée sur un support de roulette mobile transversalement à la plaque d'appui et rappelé vers la plaque d'appui par des moyens élastiques, en particulier un ressort hélicoïdal. Ainsi, la pression des moyens d'appui sur le film est maintenue constante et est adaptée aux caractéristiques du film traité en agissant sur les moyens élastiques.

Selon encore un autre aspect avantageux de l'invention, le dispositif de guidage comporte une butée de film s'étendant transversalement à la plaque d'appui, de part et d'autre de celle-ci. Ainsi, lorsque les bords du film sont en appui sur la butée, la réaction sur cette butée compense la composante de déplacement transversal et l'on est ainsi assuré que les bords du film sont exactement juxtaposés à la sortie du dispositif de guidage.

D'autres caractéristiques et avantages de l'invention ressortiront encore à la lecture de la description qui suit en liaison avec des dessins annexés, parmit lesquels:

—la figure 1 est une vue de dessus, partiellement en coupe, du dispositif selon l'invention;

—la figure 2 est une vue de côté en coupe selon la ligne II—II de la figure 1.

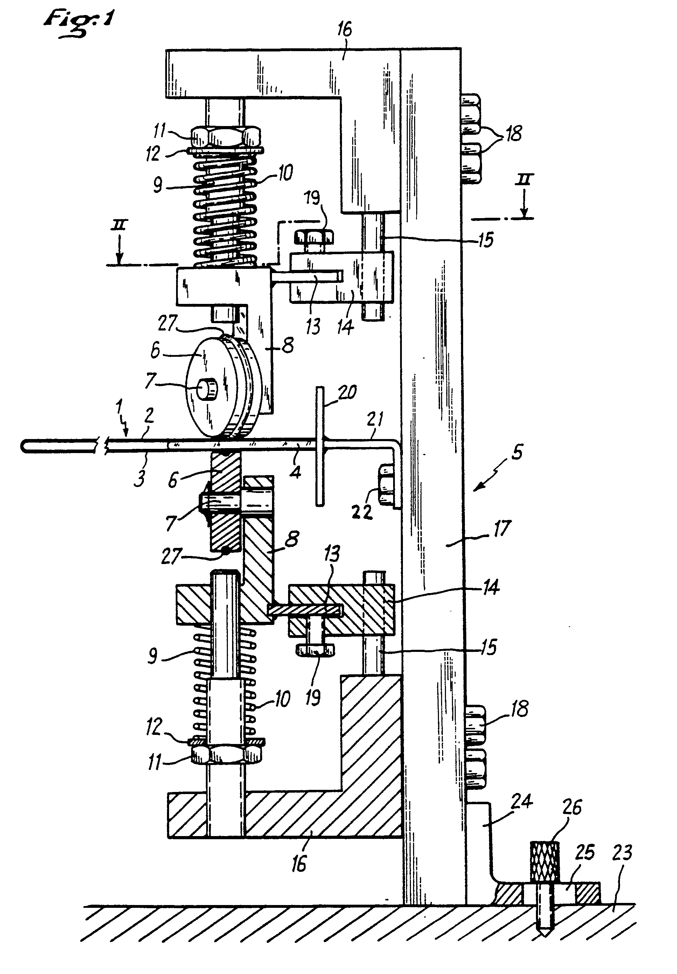

En référence aux figures, on remarquera tout d'abord qu'en fin d'étape de mise bord à bord, le film s'étend généralement verticalement et se déplace donc perpendiculairement au plan de la figure 1.

Lors de son passage dans le dispositif de guidage, le film souple 1, par exemple un film en matière thermoplastique, a déjà été préalablement replié sur lui-même dans un conformateur en éventuellement équipé d'embouts. Le film se présente donc avec deux plis, 2, 3, en vis-à-vis. A la sortie du conformateur, les bords des plis 2 et 3 sont généralement à peu près juxtaposés, mais, ainsi que cela a été souligné ci-dessus, il est souhaitable d'améliorer la précision de cette juxtaposition avant la soudure bord à bord. Pour cela, le dispositif selon l'invention comporte une plaque d'appui lisse 4 fixée à un châssis généralement désigné en 5. La plaque d'appui 4 est montée parallèlement au film 1 et est disposée pour s'engager entre les plis 2 et 3 du film. Le dispositif de guidage comporte en outre des moyens de pression formés par des roulettes 6, disposées de part et d'autre de la plaque d'appui 4. Les roulettes 6 sont chacune montées sur un axe de rotation 7 parallèle à la plaque d'appui 4. Les axes de rotation 7 sont eux-mêmes fixés sur des supports de roulettes 8 montés pour coulisser et pour pivoter sur des axes de pivotement 9 perpendiculaires à la plaque d'appui 4, de sorte que les supports de roulettes 8 sont mobiles transversalement à la plaque d'appui 4. Les supports de roulettes 8 sont rappelés vers la plaque d'appui 4 par des moyens élastiques formés par des ressorts hélicoïdaux 10 montés autour des axes de pivotement 9 et dont le degré de compression peut être réglé par des écrous 11 montés sur la base filetée des axes de pivotement 9 et agissant sur le ressort 10 par l'intermédiaire de rondelles 12.

Les moyens de pression sont ainsi disposés pour maintenir les plis du film 1 contre la plaque d'appui 4 et pour prendre différentes orientations par rapport à la direction de déplacement E du film 1.

Sur le mode de réalisation illustré, le dispositif de guidage comporte des moyens de blocage de l'orientation des moyens de pression. Ces moyens de blocage comprennent des secteurs circulaires 13 fixés aux supports de roulettes 8 perpendiculairement à l'axe de pivotement 9 et des moyens de liaison des secteurs 13 au châssis 5. Les moyens de liaison sont formés par une pièce de liaison 14, montée pour coulisser sur des colonnettes 15 portées par des équerres 16, elles-mêmes fixées à une plaque de base 17 du châssis 5 par des boulons 18. Les pièces de liaison 14 comprennent une fente dans laquelle s'engage le secteur 13 correspondant dont la position par rapport à la pièce de liaison 14 est maintenue fixe par un boulon de blocage 19, vissé dans la pièce de liaison 14 et prenant appui sur une face d'un secteur 13.

Par ailleurs, le dispositif comporte une butée de film 20 s'étendant transversalement à la plaque d'appui 4 de part et d'autre de celle-ci. Dans le mode de réalisation illustré, la butée de film 20 est soudée perpendiculairement à la plaque d'appui 4 qui comporte une queue 21 passant à travers une lumière (non représentée) de la butée 20. La queue 21 de la plaque d'appui 4 est repliée et fixée à la plaque de base 17 du châssis 5 par un boulon 22.

La plaque de base 17 du châssis 5 est reliée à un bâti 23 par une équerre 24 dont une branche est fixée, par exemple par une soudure, à la plaque de base 17 et dont l'autre branche comporte des lumières 25 dans lesquelles sont engagés des boulons 26 vissés dans le bâti 23 et dont la tête s'appuie sur l'équerre 24, de part et d'autre des lumières 25. L'équerre 24 et les boulons 26 forment donc des moyens de réglage de la position du châssis selon une direction transversale à la direction de déplacement du film 1; le dispositif est donc aisément adapté à différentes largeurs de films.

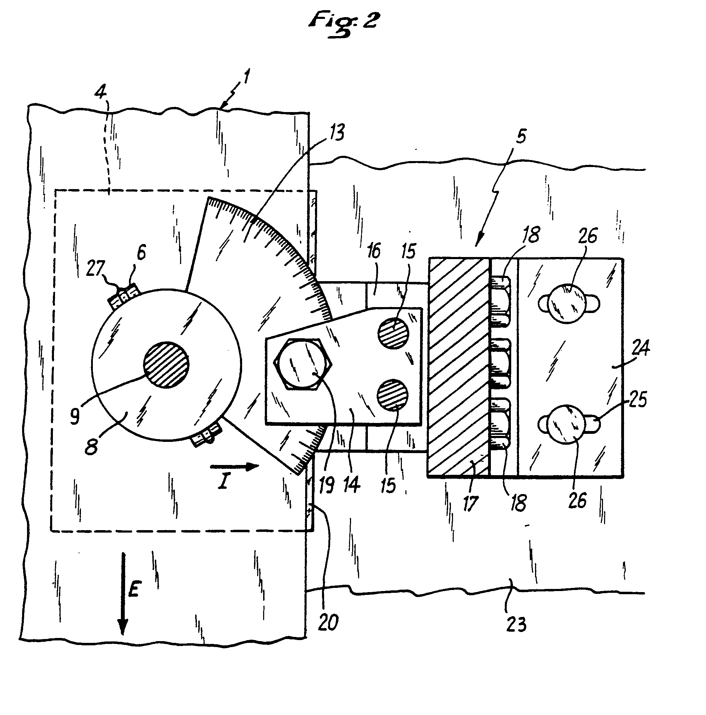

Le fonctionnement du dispositif selon l'invention est le suivant: chacun des plis du film 1 est introduit entre une face de la plaque d'appui 4 et la roulette 6 qui est en vis-à-vis, puis le film est entraîné selon la direction E de la figure 2. Si l'on constate qu'à la sortie du dispositif de guidage les bords des deux plis ne sont pas juxtaposés de la façon souhaitée, on modifie l'orientation des roulettes 6 en débloquant les boulons 19 et en faisant pivoter les supports de roulettes 8 autour des axes de pivotement 9. Lorsque la juxtaposition bord à bord souhaitée est obtenue à la sortie du dispositif de guidage, l'orientation des roulettes 6 est maintenue fixe en bloquant à nouveau les boulons 19.

On remarquera que lors de l'entraînement du film 1 celui-ci se déplace par rapport aux roulettes 6 selon un mouvement de roulement avec glissement qui induit une composante latérale de mouvement sur chaque pli du film 1. Le coefficient de glissement est réglé par trois facteurs qui sont: a) l'orientation de la roulette par rapport à la direction de déplacement du film 1, b) la force de rappel des roulettes 6 vers la plaque d'appui 4 qui, dans le cas illustré, peut être réglée en agissant sur les écrous 11, et c) le coefficient de frottement des roulettes 6 qui peut être ajusté en prévoyant sur les roulettes un jonc périphérique amovible 27.

Bien entendu l'invention n'est pas limitée au mode de réalisation décrit. En particulier, on peut remplacer les roulettes 6 par des moyens de pression différents, tels que des lames flexibles induisant une composante latérale sur les plis du film sans empêcher le déplacement du film selon cette direction d'entraînement.

Par ailleurs, on peut prévoir d'effectuer un ajustement permanent de l'orientation des moyens de pression en reliant par exemple les supports de roulettes 8 à de petits moteurs électriques commandés à distance, ou encore asservis à un détecteur placé en aval du dispositif de guidage.

**Revendications**

1. Dispositif de guidage d'un film souple (1) replié sur lui-même et entraîné en déplacement selon une direction longitudinale du film, caractérisé en ce qu'il comprend une plaque d'appui lisse (4), fixée à un châssis (5), montée parallèlement au film (1) et disposée pour s'engager entre deux plis (2, 3) du film et des moyens de pression (6, 8, 10) portés par le châssis (5) de part et d'autre de la plaque d'appui (4) pour maintenir les plis du film (1) contre la plaque d'appui (4), les moyens de pression étant montés pour être réglés selon différentes orientations par rapport à la direction de déplacement (E) du film (1).

2. Dispositif de guidage selon la revendication 1, caractérisé en ce qu'il comporte des moyens de blocage (13, 14, 19) de l'orientation des moyens de pression.

3. Dispositif de guidage selon la revendication 1 ou la revendication 2, caractérisé en ce que les moyens de pression comportent une roulette (6) montée sur un axe de rotation (7) parallèle à la plaque d'appui (4).

4. Dispositif de guidage selon la revendication 3, caractérisé en ce que la roulette comporte un jonc périphérique amovible (27).

5. Dispositif de guidage selon la revendication 3 ou la revendication 4, caractérisé en ce que la roulette (6) est montée sur un support de roulette (8), mobile transversalement à la plaque d'appui (4) et en ce que le support de roulette (8) est rappelé vers la plaque d'appui par des moyens élastiques (10).

6. Dispositif de guidage selon la revendication 5, caractérisé en ce que les moyens élastiques comportent un ressort hélicoïdal (10).

7. Dispositif de guidage selon l'une des revendications 1 à 6, caractérisé en ce que les moyens d'orientation comportent un axe de pivotement (9) s'étendant transversalement à la plaque d'appui et en ce que les moyens de pression sont montés de façon pivotante sur cet axe.

8. Dispositif de guidage selon la revendication 2 et la revendication 7, caractérisé en ce que les moyens de blocage de l'orientation des moyens de pression comportent un secteur (13) fixé aux moyens de pression transversalement à l'axe de pivotement (9) et des moyens de liaison (14, 15) du secteur (13) au châssis (5).

9. Dispositif de guidage selon l'une des revendications 1 à 8, caractérisé en ce qu'il comporte une butée de film (20) s'étendant transversalement à la plaque d'appui (4), de part et d'autre de celle-ci.

10. Dispositif de guidage selon l'une des revendications 1 à 9, caractérisé en ce que le châssis comporte des moyens de réglage de position (25, 26) selon une direction transversale à la direction de déplacement du film.

## Patentansprüche

1. Führungseinrichtung zum Führen einer weichen Folie (1), die doppellagig gefaltet ist und in ihrer Längsrichtung transportiert wird, dadurch gekennzeichnet, daß die Einrichtung eine glatte Stützplatte (4) umfaßt, welche an einem Ständer (5) befestigt sowie parallel zur Folie (1) angeordnet ist und welche zwischen zwei Lagen (2, 3) der Folie hineingreift, ferner vom Ständer (5) gehaltene, oberhalb sowie unterhalb der Stützplatte (4) angeordnete Andruckmittel (6, 8, 10) zum Halten der Lagen der Folie (1) in Anlage an der Stützplatte (4), wobei die Andruckmittel in unterschiedliche Ausrichtungen bezüglich der Transportrichtung (E) der Folie (1) einstellbar sind.

2. Führungseinrichtung nach Anspruch 1, dadurch gekennzeichnet, daß sie Mittel (13, 14, 19) zum Fixieren der Ausrichtung der Andruckmittel aufweist.

3. Führungseinrichtung nach Anspruch 1 oder 2, dadurch gekennzeichnet, daß die Andruckmittel jeweils eine Rolle (6) umfassen, die auf einer parallel zur Stützplatte (4) angeordneten Drehachse (7) montiert ist.

4. Führungseinrichtung nach Anspruch 3, dadurch gekennzeichnet, daß die Rolle einen abnehmbaren Umfangsreifen (27) trägt.

5. Führungseinrichtung nach Anspruch 3 oder 4, dadurch gekennzeichnet, daß die Rolle (6) an einem Rollenträger (8) montiert ist, welcher quer zur Stützplatte (4) beweglich angeordnet ist, und daß der Rollenträger (8) durch Federmittel (10) gegen die Stützplatte (4) gedrückt wird.

6. Führungseinrichtung nach Anspruch 5, dadurch gekennzeichnet, daß die Federmittel eine Spiralfeder (10) umfassen.

7. Führungseinrichtung nach einem der Ansprüche 1 bis 6, dadurch gekennzeichnet, daß die Mittel zum Einstellen der Ausrichtung eine Schwenkachse (9) umfassen, die quer zur Stützplatte steht, und daß die Andruckmittel schwenkbar auf dieser Schwenkachse gelagert sind.

8. Führungseinrichtung nach Anspruch 2 und Anspruch 7, dadurch gekennzeichnet, daß die Mittel zum Fixieren der Ausrichtung der Andruckmittel jeweils ein mit einem der Andruckeinrichtung verbundenes, quer zur Schwenkachse (9) stehendes Sektorelement (13) umfassen sowie Mittel (14, 15) zum Kuppeln des Sektorelementes (13) mit dem Ständer (5).

9. Führungseinrichtung nach einem der Ansprüche 1 bis 8, dadurch gekennzeichnet, daß sie einen Folienanschlag (20) umfaßt, welcher sich quer zur Stützplatte (4) zu beiden Seiten derselben erstreckt.

10. Führungseinrichtung nach einem der Ansprüche 1 bis 9, dadurch gekennzeichnet, daß der Ständer Einrichtungen (25, 26) zum Verstellen seiner Position in einer quer zur Transportrichtung der Folie stehenden Richtung umfaßt.

## Claims

1. A device for guiding a flexible film (1) folded back on itself and driven into displacement in a longitudinal direction of the film, characterized in that it includes a smooth support plate (4) affixed to a frame (5), mounted in a direction parallel to the film (1), and positioned to be received between two folds (2, 4) of the film, and pressure means (6, 8, 10) carried by the frame (5) on each side of the support plate (4), to maintain the folds of the film (1) against the support plate (4), the pressure means being mounted for being set according to different orientations relative to the direction of movement (E) of the film (1).

2. A guiding device according to claim 1, characterized in that it includes means (13, 14, 19) for blocking the orientation of the pressure means.

3. A guiding device according to claim 1 or claim 2, characterized in that the pressure means comprises a small wheel (6) rotatably mounted on a shaft (7) parallel to the support plate (4).

4. A guiding device according to claim 3, characterized in that the small wheel includes a movable peripheral reed (27).

5. A guiding device according to claim 3 or claim 4, characterized in that the small wheel (6) is mounted on a small wheel support (8), movable in a direction transverse to the support plate (4), and in that the small wheel support (8) is urged back toward the support plate by elastic means (10).

6. A guiding device according to claim 5, characterized in that the elastic means include a helix-shaped spring (10).

7. A guiding device according to one of claims 1 to 6, characterized in that the orientation means include a pivoting shaft (9) that extends in a direction transverse to the support plate, and in that the pressure means are pivotally mounted in that shaft.

8. A guiding device according to claim 2 and claim 7, characterized in that the means for blocking the orientation of the pressure means includes a sector (13) fixed to the pressure means in a direction transverse to the pivoting shaft (9) and connection means (14, 15) between the sector (13) and the chassis (5).

9. A guiding device according to one of claims 1 to 8, characterized in that it includes a film stop piece (20) that extends in a direction transverse to the support plate (4) on each side of the plate.

10. A guiding device according to one of claims 1 to 9, characterized in that the chassis includes means (25, 26) to adjust the position in a direction transverse to the direction of movement of the film.

# Fig.1

Fig. 2